# EUROPÄISCHE PATENTANMELDUNG

(11) **EP 2 371 735 A1**
(43) Veröffentlichungstag der Anmeldung: **05.10.2011**
(21) Anmeldenummer: 10405069.5
(22) Anmeldetag: 31.03.2010
(51) Int. Cl.: B65D 65/00

(54) **Verpackungsfolie**

(71) Anmelder: Amcor Flexibles Kreuzlingen Ltd., 8280 Kreuzlingen (CH)
(72) Erfinder: Jammet, Jean Claude, 8212 Neuhausen (CH); Bevilacqua, Markus David, 8213 Neunkirch (CH)
(74) Vertreter: Burkhart, Hans

(57) **Zusammenfassung**

Eine Verpackungsfolie (10) auf der Basis eines Kunststofffilms (12) zum Verpacken von quaderförmigen Nahrungsmittelprodukten zeichnet sich dadurch aus, dass der Kunststofffilm (12) ein cast -Film auf Basis von Polyethylenterephthalat (cast PET) enthaltend ein Random-Copolymer aus Ethylen (E) und Methyl- oder Butylacrylat (MA oder BA) und ein Random-Terpolymer aus Ethylen (E), Methyl- oder Butylacrylat (MA oder BA) und Glycidylmethylacrylat (GMA), mit Polyethylenterephthalat (PET) als Rest, ist.

## Beschreibung

Die Erfindung betrifft eine Verpackungsfolie auf der Basis eines Kunststofffilms mit guten Dead Fold-Eigenschaften und hoher Reissfestigkeit zum Verpacken von quaderförmigen Nahrungsmittelprodukten.

Eine übliche Verpackung von quader- oder würfelförmigen Nahrungsmittelprodukten, wie z.B. Bouillonwürfeln, besteht aus einer goldlackierten oder farbig bedruckten Aluminiumfolie als Aussenseite und einer Papierschicht als Innenseite der Verpackung. Zwischen der Aluminiumfolie und der Papierschicht ist eine dünne Wachsschicht angeordnet. Eine Erwärmung des verpackten Würfels führt zu einem Schmelzen des Wachses, welches durch das Papier diffundiert und zu einer Verklebung der überlappenden Teile der Verpackungsfolie führt.

Die WO-A-01/25109 offenbart eine Kunststofffolie zum Verpacken von würfelförmigen Produkten, wie z.B. Suppenwürfeln. Die aus einem Polyolefin, vorzugsweise aus orientiertem Polyethylen (OPE) oder orientiertem Polypropylen (OPP), bestehende Kunststofffolie zeichnet sich durch eine leichte Faltbarkeit aus. Die Kunststofffolie kann einseitig metallisiert und mit einer Klebe- oder Siegelschicht versehen sein, welche beispielsweise nur dort aufgebracht ist, wo sie gebraucht wird. Weiter kann auf der Kunststofffolie ein gegebenenfalls mit einem Abdecklack versehener Farbauftrag vorgesehen sein.

Eine aus der EP-A-0 870 695 bekannte Verpackungsfolie für Bouillonwürfel besteht aus einem Film auf der Basis von Polyolefin, auf dessen Aussenseite an vorbestimmten Positionen eine Kaltsiegelschicht angeordnet ist. Die Innenseite des Polyolefinfilms ist mit einer Antihaftbeschichtung versehen. Im Bedarfsfall kann der Polyolefinfilm zur Erzeugung einer Barriereschicht gegen den Durchtritt von Sauerstoff metallisiert sein.

Eine Verpackungsfolie für würfelförmige Produkte auf der Basis eines Polyolefinfilms ist auch aus der EP-A-0 990 596 bekannt.

Der Erfindung liegt die Aufgabe zugrunde, eine Verpackungsfolie der eingangs genannten Art auf der Basis eines Kunststofffilms zu schaffen, welche hinsichtlich der Faltbarkeit hohen Ansprüchen zu genügen vermag und insbesondere neben einer hohen Reissfestigkeit gute Dead Fold-Eigenschaften aufweist. Die Verpackungsfolie soll zudem auf den üblichen, schnell laufenden FFS (form fill seal) Verpackungsmaschinen eingesetzt werden können.

Zur erfindungsgemässen Lösung der Aufgabe führt, dass der Kunststofffilm ein cast -Film auf Basis von Polyethylenterephthalat (cast PET) enthaltend ein Random-Copolymer aus Ethylen (E) und Methyl- oder Butylacrylat (MA oder BA) und ein Random-Terpolymer aus Ethylen (E), Methyl- oder Butylacrylat (MA oder BA) und Glycidylmethylacrylat (GMA), mit Polyethylenterephthalat (PET) als Rest, ist.

Mit den erfindungsgemäss zugegebenen Additiven lässt sich der Kunststofffilm besonders gut durch Blasextrusion herstellen.

Der cast PET -Film enthält bevorzugt 96 bis 60 Gew.-% PET, 3 bis 20 Gew.-% eines Random-Copolymers aus 90 bis 60 Gew.-% Ethylen (E) und 10 bis 40 Gew.-% Methyl- oder Butylacrylat (MA oder BA) und 1 bis 20 Gew.-% eines Random-Terpolymers aus 90 bis 50 Gew.-% Ethylen (E), 10 bis 40 Gew.-% Methyl- oder Butylacrylat (MA oder BA) und 5 bis 30 Gew.-% Glycidylmethylacrylat (GMA).

Ein geeignetes Random-Copolymer aus Ethylen (E) und Methylacrylat (MA) ist beispielsweise LOTRYL^{®} 24 MA 005 mit 76 Gew.-% Ethylen (E) und 24 Gew.-% Methylacrylat (MA).

Ein geeignetes Random-Terpolymer aus Ethylen (E), Methylacrylat (MA) und Glycidylmethacrylat (GMA) ist beispielsweise LOTADER^{Ⓡ} AX8900 mit 70 Gew.-% Ethylen (E), 24 Gew.-% Methylacrylat (MA) und 8 Gew.-% Glycidylmethacrylat (GMA).

Ein geeigneter cast PET-Film enthält beispielsweise 90 Gew.-% PET, 8 Gew.-% LOTRYL^{Ⓡ} 24 MA 005 und 2 Gew.-% LOTADER^{Ⓡ}AX8900.

Auf dem Kunststofffilm der erfindungsgemässen Verpackungsfolie können je nach Verwendungszweck weitere Schichten wie folgt angeordnet sein:
- eine Barriereschicht gegen den Durchtritt von Wasserdampf und Gasen,
- optional auf der Barriereschicht eine erste Schutzlackschicht,
- optional auf der Barriereschicht oder auf der ersten Schutzlackschicht eine Bedruckung,
- auf der Bedruckung eine zweite Schutzlackschicht, optional in der Form einer Heisssiegelschicht, oder eine zweite Schutzlackschicht mit einer Heisssiegelschicht an vorbestimmten Positionen, und
- optional auf der Bedruckung, auf der zweiten Schutzlackschicht oder auf der Heisssiegelschicht eine Kaltsiegelschicht an vorbestimmten Positionen.

Bei der erfindungsgemässen Verpackungsfolie ist normalerweise der als Basissubstrat eingesetzte cast PET-Film nur auf einer Seite mit weiteren Beschichtungen versehen. Die unbeschichtete Seite des cast PET-Films bildet an einer fertigen Verpackung üblicherweise die Innenseite, d.h. die dem zu verpackenden Füllgut zugewandte Seite.

Die Sperrschicht gegen Gase Dämpfe und Feuchtigkeit, die sog. Barriereschicht, kann durch eine Metallfolie aus beispielsweise Aluminium gebildet sein. Andere geeignete Materialien für Sperrschichten sind beispielsweise Filme aus Kunststoffen, wie Polyvinylidenchlorid (PVDC) oder Ethylvinylalkohol, oder eine Schicht aus keramischen Materialien, wie beispielsweise aus Silizium- oder Aluminiumoxid bzw. -nitrid, die in dünner Schicht, z.B. im Bereich von 10 - 500 nm, im Vakuum auf die Trägerfolie abgeschieden werden. Beispiele weiterer Sperrschichten sind metallische Schichten, z.B. aus Aluminium, die durch Verdampfen im Hochvakuum oder Sputtern auf dem Träger abgeschieden werden.

Im vorliegenden Fall ist insbesondere eine Metallisierung geeignet, dem Kunststofffilm und damit der Verpackungsfolie Barriereeigenschaften zu verleihen, welche den Durchtritt von Flüssigkeiten, Gasen, Dämpfen, Wasserdampf, Aromen oder Geruchsstoffen verhindern. Die Metallisierung schützt das Füllgut auch vor einem schädlicher Lichteinfluss. Eine bevorzugte Metallisierung besteht aus Aluminium, welches beispielsweise durch Sputtern oder durch Abscheidung aus dem Vakuum auf den Kunststofffilm in einer Dicke von etwa 10 nm bis etwa 2 µm aufgetragen wird.

Als Schutzschicht für die Metallisierung wird zweckmässigerweise ein Lack auf der Basis von Nitrocelluloselack verwendet. Diese erste Schutzlackschicht dient zugleich als Druckträger. In diesem Fall wird die Bedruckung bevorzugt ebenfalls mit einer Schutzlackschicht auf der Basis von Nitrocelluloselack versehen. Der Auftrag der Heisssiegelschicht an vorbestimmten Positionen erfolgt wie die zweite Schutzlackschicht auf die Bedruckung.

Das Bedrucken des metallisierten und mit der ersten Schutzlackschicht versehenen Kunststofffilms kann mit allen bekannten Druckverfahren vorgenommen werden, so z.B. Buch-, Offset-, Flexo-, Sieb-, Helio- und Kupfertiefdruck, aber auch Laserdruck, Inkjet, elektrofotografische und magnetografische Druckverfahren. Die Wahl, welches Druckverfahren zur Anwendung kommt, hängt von der gewünschten Druckqualität, von den jeweiligen technischen Gegebenheiten und der Auflagenhöhe ab. Die zweite Schutzlackschicht schützt das Druckbild.

Eine bevorzugte Heisssiegelschicht ist auf einem Lack auf der Basis von Copolymeren aus Ethylen und Vinylacetat oder Vinylacetat und Vinylchlorid aufgebaut.

Eine bevorzugte Kaltsiegelschicht ist auf einem Lack auf der Basis von Natur- oder Kunstlatex aufgebaut. Es können aber auch andere Haftkleber verwendet werden.

Da die Heiss- und Kaltsiegelschichten mit hoher Genauigkeit an den vorbestimmten Positionen aufgetragen werden müssen, erfolgt deren Auftrag bevorzugt ebenfalls auf einer Druckmaschine über eine Druckmarkensteuerung (registered).

Die erfindungsgemässe Verpackungsfolie wird als Rollenware hergestellt. Bei einer ersten Art der Verpackung wird die Verpackungsfolie von der Rolle abgewickelt und zu einzelnen Folienblättern geschnitten. Die Folienblätter, welche das Verpackungsmaterial für je einen zu verpackenden quaderförmigen Block oder Würfel bilden, werden in einer speziellen Einrichtung, die bei weichen Würfeln aus z.B. einer halbfesten Bouillonmasse oder Weichkäse einen Kolben umfassen kann, durch Falten an die Seitenflächen des Blockes angelegt, wobei die Folie an zwei gegenüberliegenden Seitenflächen eingeschlagen wird und sich überlappt. In diesem Überlappungsbereich sind optional die Heiss- und Kaltsiegelschichten angeordnet. Bei einer zweiten Verpackungsart wird die Verpackungsfolie über eine Längsschweissnaht zu einem Schlauch geformt und nach dem Einschieben eines Würfels wird eine einzelne Verpackungseinheit vom Schlauch abgeschnitten. Anschliessend erfolgt das Einschlagen der Folie an den offenen Seiten.

Die optionale Kaltsiegelschicht dient der Fixierung der um das Füllgut gewickelten und diesem anliegenden Verpackungsfolie im Überlappungsbereich, damit sich die Folie vor dem nachfolgenden Heisssiegeln nicht selbsttätig wieder entfalten und den weiteren Verarbeitungsprozess stören kann. Mit dieser vorläufig fixierten Folie wird der verpackte quaderförmige Block oder Würfel zu einer Heisssiegeleinrichtung transportiert, wo die Heisssiegelung zur Erzeugung einer dauerhaften Fixierung der Folie erfolgt.

Die erfindungsgemässe Verpackungsfolie ist ausgezeichnet maschinengängig und lässt sich auf üblichen FFS Verpackungsmaschinen ohne Anzeichen einer Reissneigung verarbeiten und zeigt ein ausgezeichnetes Faltverhalten mit geringer Rückstellelastizität, d.h. mit guten Dead Fold-Eigenschaften.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: den Schichtaufbau einer bevorzugten Ausführungsform einer Verpackungsfolie;
- Fig. 2: eine Schrägsicht auf einen mit der Verpackungsfolie von Fig. 1 durch Umwicklung bzw. Falten und Einschlagen verpackten Quader.

Eine Verpackungsfolie weist -- von innen nach aussen -- in einem einfachen Fall beispielsweise folgenden Aufbau auf:
- cast PET -Film aus 90 Gew.-% PET, 8 Gew.-% LOTRYL^{®} 24 MA 005 und 2 Gew.-% LOTADER^{®} AX8900;
- Barriereschicht aus Aluminium, im Vakuum auf den Kunststofffilm aufgedampft, 50 nm dick;
- Bedruckung, z. B. durch Helio- oder Flexographie;
- Heisssiegelschicht, hergestellt durch Auftrag von 2.0 ± 1 g/m² eines Lackes auf der Basis von Copolymeren aus Ethylen und Vinylacetat.

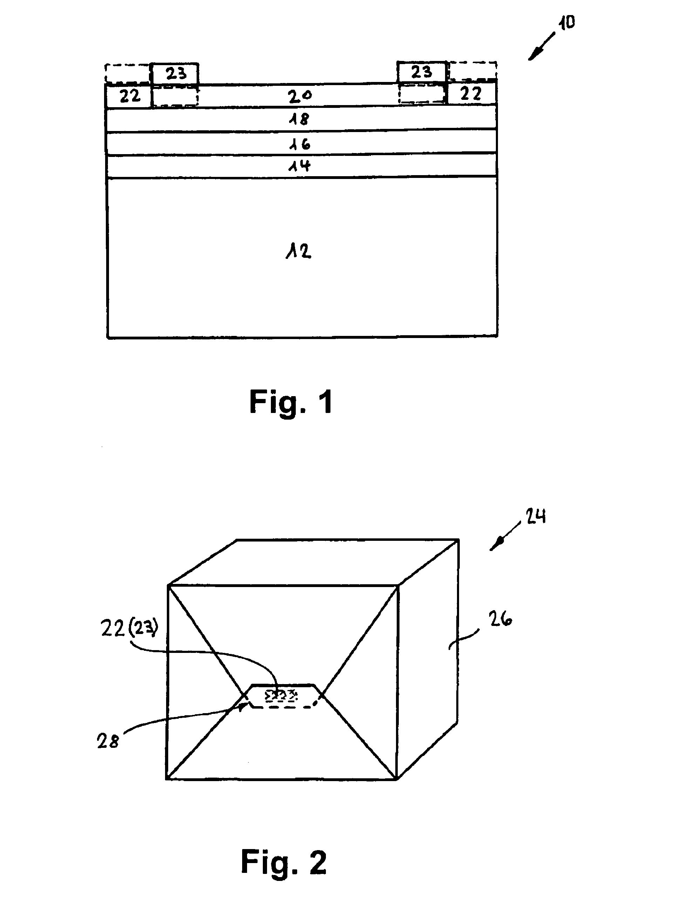

Eine in Fig. 1 gezeigte Verpackungsfolie 10 weist beispielsweise folgenden Aufbau auf:
12 cast PET -Film aus 90 Gew.-% PET, 8 Gew.-% LOTRYL^{®} 24 MA 005 und 2 Gew.-% LOTADER^{Ⓡ}AX8900;
14 Barriereschicht aus Aluminium, im Vakuum auf den Kunststofffilm 12 aufgedampft, 50 nm dick;
16 erste Schutzlackschicht aus einem Nitrocelluloselack, 1,1 ± 0,5 g/m² Flächengewicht;
18 Bedruckung, z. B. durch Helio- oder Flexographie;
20 zweite Schutzlackschicht aus Nitrocelluloselack, 2.0 ± 1 g/m² Flächengewicht;
22 Heisssiegelschicht, hergestellt durch Auftrag von 2.0 ± 1 g/m² eines Lackes auf der Basis von Copolymeren aus Ethylen und Vinylacetat
23 Kaltsiegelschicht auf der Basis von Natur- oder Kunstlatex oder anderer Haftkleber, 1 - 4 g/m² Flächengewicht.

Bei der Herstellung der Verpackungsfolie 10 wird zunächst der Kunststofffilm 12 mit der Barriereschicht 14 versehen. Anschliessend erfolgt der Auftrag einer ersten Schutzschicht 16. Diese kann auch fehlen, wenn ein Bedrucken der Barriereschicht problemlos ist. Auf die erste Schutzlackschicht 16 oder bei fehlender Schutzlackschicht direkt auf die Barriereschicht 14 folgt die Bedruckung 18, welche mit der zweiten Schutzlackschicht 20 versehen wird.

Der Auftrag der Heisssiegelschicht 22 auf der Bedruckung 18 erfolgt an vorbestimmten Positionen, an welchen bei der späteren Verpackung die Siegelung erfolgen soll.

Der Auftrag der Kaltsiegelschicht 23 erfolgt ebenfalls an vorbestimmten Positionen, an welchen bei der späteren Verpackung die Siegelung erfolgen soll. In der Zeichnung ist die Kaltsiegelschicht unmittelbar neben der Heisssiegelschicht 22 auf der zweiten Schutzlackschicht 20 aufgetragen. Alternativ kann die Kaltsiegelschicht 23 - wie in der Zeichnung strichliniert dargestellt - auch direkt auf die Bedruckung 18 oder auf die Heisssiegelschicht 22 aufgetragen werden.

Die freie Seite des Kunststofffilms 12 bildet die Innenseite, die zweite Schutzlackschicht 20 und die an vorbestimmten Positionen aufgetragenen Heiss- und Kaltsiegelschichten 22, 23 die Aussenseite der aus der Verpackungsfolie 10 hergestellten Verpackung.

Eine aus der Verpackungsfolie 10 hergestellte Verpackung 24 für ein quaderförmiges Produkt aus z.B. einer festen oder halbfesten Bouillonmasse liegt dem Füllgut gemäss Fig. 2 dicht an, die Seitenflächen 26 der Verpackung entsprechen den Seitenflächen des verpackten Bouillonblocks. An zwei einander gegenüberliegenden Seiten der Verpackung ist die Verpackungsfolie eingeschlagen. Im Überlappungsbereich 28 befindet sich die an vorbestimmten Positionen aufgetragenen Heiss- und Kaltsiegelschichten 22, 23. Die Kaltsiegelung ergibt sich beim Einschlagen und Andrücken der Verpackungsfolie beim maschinellen Abpacken der quaderförmigen Blöcke oder Würfel. Die Heisssiegelung erfolgt beispielsweise während des Durchlaufs des verpackten Blocks zwischen zwei beheizten Schienen.

Zur Bestimmung der Dead Fold-Eigenschaften unterschiedlicher Verpackungsfolien wurden Streifen einer Breite von 15 mm geschnitten und mittels Klebstreifen auf ein Blatt Papier geklebt. In einem Abstand von 25 mm zum Streifenende wurden die Streifen reproduzierbar auf einem Laborsiegelgerät mit kalten Siegelbacken um 180° gefaltet. Nach 24 h wurde der Winkel zwischen dem freien Ende und dem fixierten Teil der Musterstreifen mit einem Winkelmesser gemessen. Die Überlegenheit einer Verpackungsfolie auf der Basis eines reinen cast PET-Films im Vergleich zu biaxial orientierten PET-Filmen und zu den bisher eingesetzten oPP-Filmen hinsichtlich ihrer Dead Fold Eigenschaften zeigen die an je 5 Proben gemessenen und in der nachfolgenden Tabelle als Mittelwerte zusammengestellten Rückstellwinkel. Die Verpackungsfolien hatten alle den folgenden Aufbau:
Kunststofffilm / Metallisierung / Primer / Bedruckung / Heisssiegellack

**Tabelle 1: Rückstellwinkel von Verpackungsfolien**

| **Kunststofffilm** | **Orientierung** | **Rückstellwinkel** |
|---|---|---|
| oPET 18 µm | MD | 133° |
| | CD | 136° |
| oPP 38 µm | MD | 177° |
| | CD | 174° |
| oPP 38 µm | MD | 177° |
| | CD | 175° |
| cast PET 25 µm | MD | 57° |
| | CD | 47° |
| oPP 38 µm | MD | 171° |
| | CD | 176° |
| oPET 12 µm | MD | 139° |
| | CD | 143° |
| oPP 38 µm | MD | 171° |
| | CD | 14° |

| | | |
|---|---|---|
| MD = Maschinenrichtung CD = Querrichtung | | |

An zwei 25 µm dicken cast PET -Filmen mit und ohne Zusatz von LOTRYL^{Ⓡ} 24 MA 005 und LOTADER^{Ⓡ} AX8900 wurden verschiedene mechanische Eigenschaften sowie das Siegelverhalten untersucht. Die zwei untersuchten cast PET -Filme wiesen folgende Zusammensetzung auf:

| | |
|---|---|
| Film A: | 100 Gew.% PET |
| | |
| Film B: | 90 Gew.-% PET |
| | + 8 Gew.-% LOTRYL^{®} 24 MA 005 |
| | + 2 Gew.-% LOTADER^{Ⓡ} AX8900 |

Film B weist eine erfindungsgemässe, Film A eine nicht erfindungsgemässe Zusammensetzung auf.

Die an den beiden Filmen durchgeführten Prüfungen und die verwendeten Prüfgeräte sind nachfolgend erläutert. Die in den Tabellen 2 bis 6 zusammengestellten Versuchsergebnisse zeigen deutlich das bessere Dehnverhalten und die höhere Reissfestigkeit des cast PET -Films mit Zusatz von LOTRYL^{®} 24 MA 005 und LOTADER^{Ⓡ} AX8900 gegenüber einem reinen cast PET -Film.

### Dart Drop Test

Mit einem CEAST Dart Drop Tester wurde nach ISO 7765-2 die dynamische Durchstossfestigkeit der Folien bestimmt. Ein frei fallender Bolzen mit einer kugelförmigen Prüfoberfläche mit einem Radius von 20 mm trifft vertikal auf die zwischen zwei in einem Abstand von 40 mm angeordneten Klemmbacken eingespannte Folie auf. Im Fallbolzen ist eine dynamometrische Zelle integriert und die aktuelle Dehnung wird mittels eines Wegrecorders aufgezeichnet. Die auf diese Weise erhaltenen Daten werden zur Berechnung der absorbierten Energie verwendet. Die Fallhöhe betrug 25 cm, die Temperatur lag bei 24°C. Die Versuchsergebnisse sind in Tabelle 2 dargestellt.

**Tabelle 2: Dart Drop Test**

| | **F max [N]** | **d bei F max [mm]** | **d total [mm]** | **E total [J]** |
|---|---|---|---|---|
| **Film A** | < Messgrenzwert | < Messgrenzwert | < Messgrenzwert | < Messgrenzwert |
| **Film B** | 49.65 | 0.83 | 2.06 | 0.06 |

| | | | | |
|---|---|---|---|---|
| F max maximale Kraft d bei F max Dehnung bei Fₘₐₓ d total Gesamtdehnung E total gesamte absorbierte Energie | | | | |

### Weiterreisswiderstand

Mit einem Fallpendelgerät Modell 009ED von Lorentzen und Wettre wurde nach DIN 53 128 kontinuierlich der Weiterreisswiderstand nach Elmendorf gemessen. Die Folienproben hatten eine Abmessung von 50 mm x 62 mm. Die Risslänge nach dem ersten Einschnitt betrug 43 ± 0.5 mm. Verwendet wurde ein Pendel bis 8000 mN, Genauigkeit ± 0.2 mN. Die Folienproben werden in einer Klemmvorrichtung gehalten, mit einem Einschnitt versehen und mit dem Pendel durchgerissen. Die Versuchsergebnisse sind in Tabelle 3 dargestellt. Tabelle 3: Weiterreisswiderstand

| | **Weiterreisswiderstand in MD [mN]** | **Weiterreisswiderstand in CD [mN]** |
|---|---|---|
| **Film A** | 218 | 326 |
| **Film B** | 716 | 456 |

| | | |
|---|---|---|
| MD: Maschinenrichtung CD: Querrichtung zur Maschinenrichtung | | |

### Zug E-Modul

Mit einem Zwick Z010 Prüfgerät wurde das Zug E-Modul mit den folgenden Randbedingungen bestimmt:
Start der Zug E-Modul Bestimmung bei 0.05 %
Ende der Zug E-Modul Bestimmung bei 0.25 %

| Bestimmungsmethode: Sekantenmodul | |
|---|---|
| Zuggeschwindigkeit E-Modul: | 1 mm/min |
| Zuggeschwindigkeit Rp, ReH: | 250 mm/min |
| Probenbreite: | 15 mm |

### Die Versuchsergebnisse sind in Tabelle 4 dargestellt.

**Tabelle 4: Zug E-Modul**

| | **E-Modul in MD [N/mm²]** | **E-Modul in CD [N/mm²]** |
|---|---|---|
| **Film A** | 2497 | 2514 |
| **Film B** | 2247 | 1995 |

| | | |
|---|---|---|
| MD: Maschinenrichtung CD: Querrichtung zur Maschinenrichtung | | |

### Festigkeits- und Dehnungswerte

Mit einem Zwick Z010 Prüfgerät wurden nach DIN 53 455 Zugversuche mit den folgenden Randbedingungen zur Bestimmung der Festigkeits- und Dehnungswerte durchgeführt:

| | |
|---|---|
| Zuggeschwindigkeit: | 250 mm/min |
| Klemmbackendistanz bei Versuchsbeginn: | 100mm |
| Probenbreite: | 15 mm |
| Die Versuchsergebnisse sind in Tabelle 5 dargestellt. | |

**Tabelle 5: Festigkeits- und Dehnungswerte**

| | **Rp0.2 [N/mm²]** | | **ReH [N/mm²]** | | **A [%]** | | **F max [N]** | | **A bei F max [%]** | |
|---|---|---|---|---|---|---|---|---|---|---|
| | **MD** | **CD** | **MD** | **CD** | **MD** | **CD** | **MD** | **CD** | **MD** | **CD** |
| **Film A** | 59 | 58 | 59 | 58 | 2.6 | 2.5 | 22.7 | 22.3 | 2.6 | 2.5 |
| **Film B** | 56 | 46 | 52 | 27 | 271.8 | 14.7 | 20.7 | 16.7 | 270.8 | 2.7 |

| | |
|---|---|
| Rp0.2: | Streckgrenze |
| ReH: | Zugfestigkeit |
| F max: | maximale Kraft |
| A: | Bruchdehnung |
| A bei F max: | Dehnung bei Fₘₐₓ |
| E total: | gesamte absorbierte Energie |

### Siegeleigenschaften

Auf einer permanent geheizten Kopp-Siegeleinrichtung wurden bei verschiedenen Temperaturen Siegelnähte hergestellt. Teststreifen wurden quer zur Siegelnaht entnommen. Auf einem Zwick Z010 Prüfgerät wurden Zugversuche mit den folgenden Randbedingungen durchgeführt:

| | |
|---|---|
| Zuggeschwindigkeit: | 50 mm/min |
| Klemmbackendistanz bei Versuchsbeginn: | 50 mm |
| Probenbreite: | 15 mm |
| Die Versuchsergebnisse sind in Tabelle 6 dargestellt. | |

**Tabelle 6: Siegeleigenschaften**

| | | **Siegeltemperatur [°C]** | | | | |
|---|---|---|---|---|---|---|
| | | 90 | 100 | 110 | 120 | 130 |
| **Film A** | S1 [N/15 mm] | 0.00 | 0.00 | 7.50 | 10.00 | 15.30 |
| | S2 [N/15 mm] | 0.00 | 0.00 | 0.20 | 2.50 | 1.60 |
| **Film B** | S1 [N/15 mm] | 0.00 | 5.00 | 13.20 | 14.10 | 14.50 |
| | S2 [N/15 mm] | 0.00 | 0.70 | 0.10 | 0.20 | 0.90 |

| | | | | | | |
|---|---|---|---|---|---|---|
| S1: Siegelfestigkeit S2: Standardabweichung | | | | | | |

## Patentansprüche

1. Verpackungsfolie auf der Basis eines Kunststofffilms (12) mit guten Dead Fold-Eigenschaften und hoher Reissfestigkeit zum Verpacken von quaderförmigen Nahrungsmittelprodukten,
**dadurch gekennzeichnet, dass**
der Kunststofffilm (12) ein cast -Film auf Basis von Polyethylenterephthalat (cast PET) enthaltend ein Random-Copolymer aus Ethylen (E) und Methyl- oder Butylacrylat (MA oder BA) und ein Random-Terpolymer aus Ethylen (E), Methyl- oder Butylacrylat (MA oder BA) und Glycidylmethylacrylat (GMA), mit Polyethylenterephthalat (PET) als Rest, ist.

2. Verpackungsfolie nach Anspruch 1, **dadurch gekennzeichnet, dass** der cast PET -Film 96 bis 60 Gew.-% PET, 3 bis 20 Gew.-% eines Random-Copolymers aus 90 bis 60 Gew.-% Ethylen (E) und 10 bis 40 Gew.-% Methyl- oder Butylacrylat (MA oder BA) und 1 bis 20 Gew.-% eines Random-Terpolymers aus 90 bis 50 Gew.-% Ethylen (E), 10 bis 40 Gew.-% Methyl- oder Butylacrylat (MA oder BA) und 5 bis 30 Gew.-% Glycidylmethylacrylat (GMA) enthält.

3. Verpackungsfolie nach Anspruch 1 oder 2, **dadurch gekennzeichnet, dass** auf dem Kunststofffilm (12)
- eine Barriereschicht (14) gegen den Durchtritt von Wasserdampf und Gasen,
- optional auf der Barriereschicht (14) eine erste Schutzlackschicht (16),
- optional auf der Barriereschicht (14) oder auf der ersten Schutzlackschicht (16) eine Bedruckung (18),
- auf der Bedruckung (18) eine zweite Schutzlackschicht (20), optional in der Form einer Heisssiegelschicht (22), oder eine zweite Schutzlackschicht (20) mit einer Heisssiegelschicht (22) an vorbestimmten Positionen, und
- optional auf der Bedruckung (18), auf der zweiten Schutzlackschicht (20) oder auf der Heisssiegelschicht (22) eine Kaltsiegelschicht (23) an vorbestimmten Positionen
angeordnet ist.

4. Verpackungsfolie nach Anspruch 3, **dadurch gekennzeichnet, dass** die Barriereschicht (14) eine aus Aluminium aufgebaute Metallisierung, ein Kunststofffilm aus Polyvinylidenchlorid (PVDC) oder eine aus dem Vakuum abgeschiedene, 10 - 500 nm dicke Schicht aus keramischen Materialien, vorzugsweise aus Silizium- oder Aluminiumoxid, ist.

5. Verpackungsfolie nach Anspruch 3, **dadurch gekennzeichnet, dass** die Schutzlackschichten (16, 20) auf der Basis von Nitrocelluloselack aufgebaut sind.

6. Verpackungsfolie nach Anspruch 3, **dadurch gekennzeichnet, dass** die Heisssiegelschicht (22) auf einem Lack auf der Basis von Copolymeren aus Ethylen und Vinylacetat oder Vinylacetat und Vinylchlorid oder auf Acrylatbasis aufgebaut ist.

7. Verpackungsfolie nach Anspruch 3, **dadurch gekennzeichnet, dass** die Kaltsiegelschicht (23) auf einem Lack auf der Basis von Natur- oder Kunstlatex oder anderer Haftkleber aufgebaut ist.

8. Verpackungsfolie nach einem der Ansprüche 1 bis 7, **dadurch gekennzeichnet, dass** der Kunststofffilm (12) ein blasextrudierter Film ist.

9. Verpackung aus einer Verpackungsfolie (10) nach einem der vorangehenden Ansprüche, wobei ein quaderförmiges Nahrungsmittelprodukt mit der Verpackungsfolie (10) umwickelt und die Verpackungsfolie (10) eingeschlagen und optional an vorbestimmten Stellen gegen sich selbst gesiegelt ist.
